# EUROPÄISCHE PATENTSCHRIFT

(11) **EP 2 159 113 B1**
(45) Veröffentlichungstag und Bekanntmachung des Hinweises auf die Patenterteilung: **28.09.2011**
(21) Anmeldenummer: 09100360.8
(22) Anmeldetag: 16.07.2009
(51) Int. Cl.: B60S 1/04, H02G 3/22, B60S 1/34, F16J 3/04, F16J 15/02

(54) **Scheibenwischvorrichtung mit einer Dichtbuchse**
Windscreen wiper device with a sealing bushing
Dispositif d'essuie-glace avec une douille d'étanchéité

(30) Priorität: 28.08.2008 DE 102008041663
(43) Veröffentlichungstag der Anmeldung: 03.03.2010
(73) Patentinhaber: ROBERT BOSCH GMBH, 70442 Stuttgart (DE)
(72) Erfinder: Reith, Michael, 77815, Buehl-Vimbuch (DE); Lipps, Verena, 77833, Ottersweier (DE); Geubel, Paul, 76534, Baden-Baden (DE)

(56) Entgegenhaltungen:
- DE-A1- 19 903 140
- FR-A- 2 884 579
- JP-A- 9 301 133
- JP-U- 5 012 324
- US-A- 6 081 964

## Beschreibung

Die Erfindung bezieht sich auf eine Scheibenwischvorrichtung mit einer Dichtbuchse für ein Fahrzeug zur Aufnahme einer Welle im Übertragungsweg zwischen einem Antriebsmotor und einem Wischarm nach dem Oberbegriff des Anspruches 1.

### Stand der Technik

In der DE 10 2006 054 187 A1 wird eine Scheibenwischvorrichtung für ein Kraftfahrzeug beschrieben, die einen Wischermotor, eine in einem Getriebegehäuse angeordnete und von dem Wischermotor angetriebene Abtriebswelle sowie einen Wischarm umfasst, der von der Abtriebswelle betätigt wird. Die Abtriebswelle ist in einem Montageelement aufgenommen, das buchsenförmig ausgeführt ist und die Funktion einer Dichtung übernimmt, über die der Wischermotor zur Fahrzeugkarosserie oder zur Heckscheibe abgedichtet wird. Des Weiteren wird mit dem buchsenförmigen Montageelement auch eine Abdichtung zu einer Schutzkappe erreicht, die auf die Stirnseite der Abtriebswelle aufgeschoben ist.

Bei derartigen Montageelementen ist einerseits auf eine hinreichende Dichtigkeit zu achten, andererseits müssen die Montageelemente auch nachgiebig genug sein, um die Bewegung der Antriebswelle zu ermöglichen, wobei zusätzlich zu der Drehbewegung zum Erzeugen einer pendelnden Wischbewegung des Wischarms auch kleinere axiale Relativbewegungen bezogen auf das Montageelement auftreten können.

Aus der DE 199 03 140 A1 ist eine Scheibenwischvorrichtung bekannt, deren Wischerwelle in einem Wischerlager drehbar aufgenommen ist, welches eine Lagerbuchse sowie eine sich axial an die Lagerbuchse anschließende, balgförmige Blechhülse umfasst, die sich bei Einwirken einer Axialkraft verformen kann. Damit soll gewährleistet werden, dass die Wischerwelle in die Fahrzeugkarosserie verschoben wird, wenn die auf die Wischerwelle wirkende Axialkraft eine vorgegebene Größe übersteigt.

In der US 6 081 964 wird eine Dichtbuchse zum Schutz eines Kabelstrangs im Bereich einer Fahrzeugtüre beschrieben. Die Dichtbuchse, die auf den Kabelstrang aufgeschoben ist und ein Eindringen von Wasser verhindern soll, besteht aus einem glattwandigen und einem sich hieran anschließenden, gewellten Abschnitt, welcher sich axial dehnen kann.

Ein vergleichbarer Gegenstand wird auch in der FR 2 884 579 A1 beschrieben. Diese Druckschrift zeigt eine Dichtbuchse zum Einsetzen in eine Öffnung in einer Wandung, wobei durch Dichtbuchse ein Kabelbaum geführt ist. Die Dichtbuchse weist ebenfalls einen glattwandigen und einen sich hieran anschließenden, gewellten Abschnitt auf.

Des Weiteren offenbaren JP09301133 und JPH0512324U Scheibenwischvorrichtungen mit Dichtbuchsen zur Aufnahme einer Welle, gemäß dem Oberbegriff des Anspruchs 1.

### Offenbarung der Erfindung

Der Erfindung liegt die Aufgabe zugrunde, mit einfachen konstruktiven Maßnahmen eine Scheibenwischvorrichtung mit einer Dichtbuchse zur Aufnahme einer Welle so auszubilden, dass eine hohe Dichtigkeit bei zugleich guter Nachgiebigkeit gegeben ist.

Diese Aufgabe wird erfindungsgemäß mit den Merkmalen des Anspruches 1 gelöst. Die Unteransprüche geben zweckmäßige Weiterbildungen an.

Die erfindungsgemäße Scheibenwischvorrichtung für ein Fahrzeug weist eine Dichtbuchse zur Aufnahme einer Welle auf, die im

Übertragungsweg zwischen einem Antriebsmotor der Scheibenwischvorrichtung und einem Wischarm angeordnet ist. Bei dieser Welle handelt es sich insbesondere um die Abtriebswelle, die über ein Getriebe von der Ankerwelle des Antriebsmotors angetrieben wird und die Träger eines Wischarms ist oder ein Wischgestänge betätigt, an dem der Wischarm angeordnet ist.

Mithilfe der Dichtbuchse, die die Funktion eines Montageelementes hat, wird zum einen die Welle bezogen auf die Fahrzeugkarosserie fixiert, zum andern hat die Dichtbuchse die Aufgabe, Getriebeteile bzw. den Antriebsmotor der Scheibenwischvorrichtung vor Verschmutzung und Nässe zu schützen. Außerdem enthält die Dichtbuchse in einer Lagerkammer einen Schmiermittelvorrat, der zur Schmierung und Abdichtung der Welle dient.

Die Dichtbuchse besteht aus einem Einführabschnitt, über den die Welle in die Dichtbuchse eingesteckt wird, und einem sich daran axial anschließenden, einteilig ausgebildeten Lagerabschnitt zur zur Lagerung der Welle und zur Aufnahme eines Schmiermittels. Der Lagerabschnitt besitzt auf der Innenseite radial nach innen ragende Dichtlippen, die eine Lagerkammer axial begrenzen, in der das Schmiermittel aufgenommen ist und durch die die Welle hindurchgeführt ist, so dass die Welle in Kontakt mit dem Schmiermittel gelangt. Eine der die Lagerkammer begrenzenden Dichtlippen befindet sich im Übergang zwischen dem Lagerabschnitt und dem Einführabschnitt.

Des Weiteren ist vorgesehen, dass die Wandung des Lagerabschnittes balgförmig ausgebildet ist, also im Querschnitt eine Wellenform bzw. eine wellenähnliche Wandung aufweist, die insbesondere in Achsrichtung der Welle eine Dehnung und Kontraktion mit reduziertem Kraftaufwand erlaubt. Zugleich kann die Dichtbuchse aufgrund der balgförmigen Wandung im Bereich des Lagerabschnittes verhältnismäßig leicht tordiert werden, da die wellenförmige Wandung auch gegenüber einer Torsion einen geringeren Widerstand bietet. Auf diese Weise ist eine Relativverdrehung zwischen dem Einführabschnitt und dem Lagerabschnitt möglich, wobei beispielsweise der fest mit einem Fahrzeugteil verbundene Einführabschnitt weitgehend unbeeinflusst bleibt von einer Torsionsbewegung des Lagerabschnittes, welche insbesondere durch die Drehbewegung der Welle zustande kommen kann. Aber auch radiale Auslenkbewegungen, in Querrichtung zur Wellenachse gesehen, können von dem Lagerabschnitt aufgrund der Nachgiebigkeit der Lagerabschnittswandung in Querrichtung ohne Beeinflussung des Einführabschnittes ausgeführt werden.

Desweiteren ist vorgesehen, dass auf der Innenseite des Einführabschnittes ein radial nach innen ragender Stabilisierungswulst angeordnet ist, dem die Aufgabe zukommt, den Einführabschnitt, der zugleich zur Befestigung der Dichtbuchse am Fahrzeugbauteil dient, zu stabilisieren. Der Einführabschnitt stellt zugleich den Befestigungsabschnitt dar, mit dem die Dichtbuchse an der Fahrzeugkarosserie oder der Scheibe des Fahrzeuges befestigt wird. Hierbei kann es zweckmäßig sein, den innen liegenden Stabilisierungswulst axial in Höhe eines auf der Außenseite des Einführabschnittes angeordneten Einschnittes zu positionieren, der zur Fixierung der Dichtbuchse an dem Fahrzeugbauteil, also der Fahrzeugkarosserie oder der Scheibe dient. In dieser Ausführung wird die Wandstärke des Einführabschnittes in Höhe der Befestigung an der Scheibe bzw. dem Fahrzeugbauteil durch den radial nach innen ragenden Stabilisierungswulst erhöht, wodurch die Minderung der Wandstärke durch den Einschnitt auf der Außenseite des Einführabschnittes zumindest teilweise kompensiert wird. Dadurch können die Haltekräfte sowie die dynamischen Kräfte, welche im Betrieb der Scheibenwischvorrichtung und durch die Fahrzeugbewegung auftreten, im Bereich der Halterung der Dichtbuchse besser aufgenommen werden, was zu einer Verlängerung der Lebensdauer der Dichtbuchse beiträgt.

Zwischen dem Stabilisierungswulst und der axial nächstgelegenen Dichtlippe befindet sich vorzugsweise ein radial erweiterter Abschnitt, wodurch zum einen sichergestellt ist, dass der Innenmantel der Dichtbuchse nur im Bereich der Dichtlippen an der äußeren Mantelfläche der Welle anliegt und somit die Welle verhältnismäßig leicht in die Dichtbuchse eingeschoben werden kann sowie ihre Drehbewegung ausführen kann. Zum andern ist durch diese Ausführung auch gewährleistet, dass die Dichtlippe im Betrieb kleine axiale Bewegungen ausführen und damit entsprechende Wellenbewegungen kompensieren kann, die aufgrund der höheren Nachgiebigkeit des Lagerabschnittes nicht oder nur in einem reduzierten Maße auf den Einführabschnitt übertragen werden.

Benachbart zur Einführöffnung ist an der Innenseite des Einführabschnittes eine den Durchmesser verjüngernde Einführschräge angeordnet, die sich vorteilhafterweise bis zu dem Stabilisierungswulst erstreckt, der mit Abstand zur Stirnseite des Einführabschnittes angeordnet ist. Die Einführschräge ermöglicht ein sicheres und leichtes Einführen der Welle in die Dichtbuchse nach dem Montieren der Dichtbuchse am Fahrzeugteil.

Der lichte Durchmesser des Stabilisierungswulstes ist zweckmäßigerweise größer als der lichte Durchmesser der Dichtlippen, um sicherzustellen, dass nur die Dichtlippen an der Mantelfläche der Welle anliegen, nicht jedoch der Stabilisierungswulst, was andernfalls zu einer erhöhten Reibung zwischen Welle und Dichtbuchse führen würde.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenwischvorrichtung für ein Kraftfahrzeug,
- Fig. 2: eine schematische Darstellung einer Antriebsvorrichtung für einen Scheibenwischer, mit einem elektrischen Antriebsmotor, dessen Ankerwelle mit einem Zahnrad kämmt, welches fest mit einer Abtriebswelle zum Antrieb des Wischarms gekoppelt ist,
- Fig. 3: eine perspektivische Darstellung einer Dichtbuchse zur Aufnahme und Halterung der Abtriebswelle an einem Fahrzeugbauteil, beispielsweise einer Fahrzeugscheibe,
- Fig. 4: die Dichtbuchse im Schnitt.

In den Figuren sind gleiche Bauteile mit gleichen Bezugszeichen versehen.

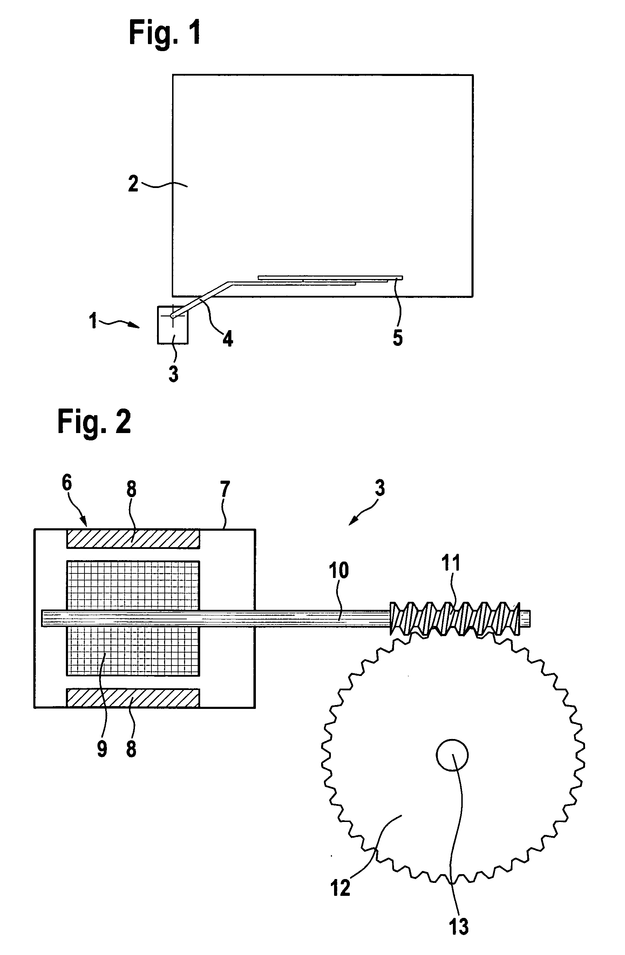

Die in Fig. 1 in schematischer Weise dargestellte Scheibenwischvorrichtung 1 wird zum Wischen einer Fahrzeugscheibe 2 in einem Kraftfahrzeug verwendet. Die Scheibenwischvorrichtung 1 besteht aus einer Antriebsvorrichtung 3, die insbesondere als Elektromotor ausgeführt ist, sowie einem vom Antriebsmotor betätigten Wischarm 4, an dem ein Wischblatt 5 gehalten ist, das auf der Fahrzeugscheibe 2 aufliegt. Bei Betätigung des Antriebsmotors 3 wird der Wischarm 4 in eine pendelnde Drehbewegung versetzt.

Die Antriebsvorrichtung 3 ist in Fig. 2 in detaillierterer Weise dargestellt. Sie besteht aus einem elektrischen Antriebsmotor 6 mit einem Gehäuse 7, in welchem Permanentmagnete 8 angeordnet sind, die eine Anker- bzw. Rotorwelle 10 umschließen, welche gemeinsam mit einer über einen Kommutator bestrombaren Spule 9 den Anker des Elektromotors bildet. Der aus dem Gehäuse 7 herausragende Abschnitt der Rotorwelle 10 ist Träger eines Gewindes bzw. einer Schnecke 11, das bzw. die mit einem Schneckenrad 12 kämmt. Schnecke 11 und Schneckenrad 12 bilden hierbei ein Getriebe, das bevorzugt in einem eigenen Getriebegehäuse angeordnet ist. Das Schneckenrad 12 ist drehfest auf einer Abtriebswelle 13 angeordnet oder das Stirnrad treibt die Abtriebswlle über ein Umsetzgetriebe an, wobei die Abtriebswelle 13 unmittelbar den Wischarm oder ein Wischgestänge antreibt, an welchem der Wischarm gehalten ist. Als Getriebe kann gegebenenfalls auch ein Planetengetriebe oder ähnliches eingesetzt werden.

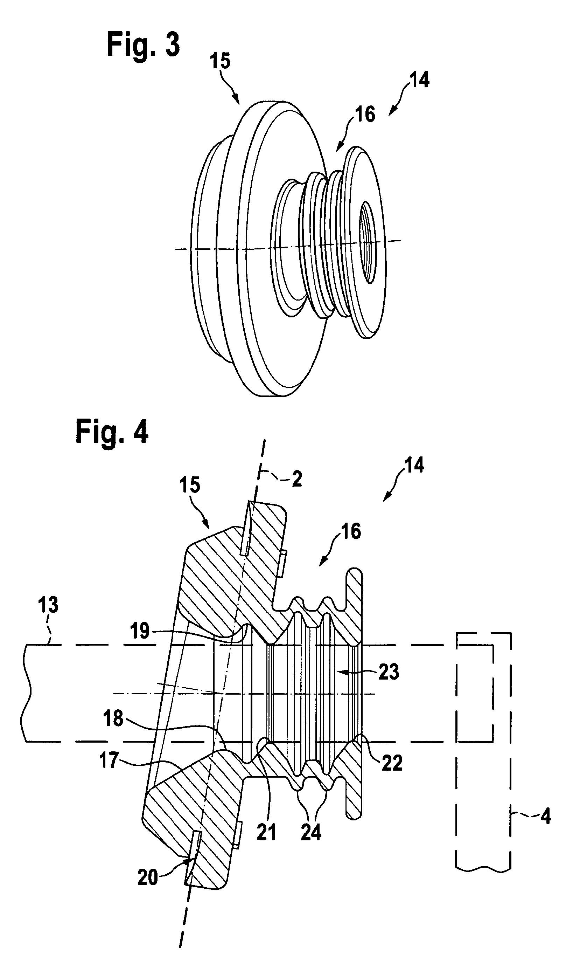

In den Fig. 3 und 4 ist eine Dichtbuchse 14 dargestellt, in der die Abtriebswelle drehbar aufgenommen ist und die als Montageelement zur Befestigung an einem Fahrzeugbauteil dient, insbesondere an einer Fahrzeugscheibe oder einem Karosserieteil des Kraftfahrzeugs. Die Dichtbuchse 14 besteht aus einem Dichtmaterial, beispielsweise einem Elastomer, und ist in Achsrichtung zweiteilig aufgebaut und umfasst einen Einführabschnitt 15 zum Einführen der Abtriebswelle und einen Lagerabschnitt 16 zum Lagern und Schmieren der Welle. Die beiden Abschnitte 15 und 16 bilden ein gemeinsames, einteilig ausgeführtes Bauteil.

Wie insbesondere der Schnittdarstellung gemäß Fig. 4 zu entnehmen, dient der axiale Innenraum der Dichtbuchse 14 zur Aufnahme der Abtriebswelle 13, die in der schematisch dargestellten Weise mit dem Wischarm 4 verbunden ist. Der Einführabschnitt 15 weist auf seiner Außenseite eine Einkerbung 20 auf, mit der die Dichtbuchse 14 an der Fahrzeugscheibe 2 befestigt ist. Gegebenenfalls kommt auch eine Befestigung an einem Karosseriebauteil in Betracht.

### Die Abtriebswelle wird über die Stirnseite des

Einführabschnittes 15 in die zentrische, axial verlaufende Ausnehmung in der Dichtbuchse 14 eingeführt. Zum erleichterten Einführen ist die Innenseite des Einführabschnittes 15 mit einer Einführschräge 17 ausgestattet, so dass sich die Ausnehmung zur Stirnseite des Einführabschnittes 15 hin trichterförmig erweitert. Die Einführschräge 17 erstreckt sich bis zu einem an der Innenseite angeordneten Stabilisierungswulst 18, der sich axial annähernd in Höhe der Einkerbung 20 befindet, die auf der Außenseite des Einführabschnittes 15 angeordnet ist. Damit wird zumindest teilweise eine Kompensation des durch die Einkerbung 20 bedingten Wandstärkenverlustes in der Wandung des Einführabschnittes 15 erzielt, da der Stabilisierungswulst 18 radial nach innen einragt und im Einführabschnitt 15 die radial engste Einschnürung bildet.

Der Lagerabschnitt 16 weist eine Lagerkammer 23 auf, die axial von zwei radial nach innen ragenden Dichtlippen 21 und 22 begrenzt ist, welche im eingeschobenen Zustand an der Mantelfläche der Abtriebswelle 13 anliegen. Zwischen den Dichtlippen 21 und 22 befindet sich ein Ringraum zwischen der Mantelfläche der Welle 13 und der Innenwandung des Lagerabschnittes 16, der zur Aufnahme eines Schmiermittels dient.

Die Wandung des Lagerabschnittes 16 ist balgförmig ausgeführt und weist eine Wellenform 24 auf. Außerdem ist die Wandung zusätzlich verglichen mit der Wandung des Einführabschnittes 15 signifikant dünner ausgebildet. Die dünnwandige Ausführung in Kombination mit der Wellenform 24 verleiht der Wandung ein erhebliches Maß an Beweglichkeit, insbesondere in Achsrichtung, aber auch im Hinblick auf eine Torsion um die Achsrichtung sowie gegenüber radialen Auslenkungen und Biegungen. Dies hat den Vorteil, dass der Lagerabschnitt 16 bezogen auf den Einführabschnitt 15 Relativbewegungen ausführen kann, ohne dass dies die Position des Einführabschnittes in maßgebender Weise beeinflusst.

Zwischen der dem Einführabschnitt 15 zugewandten Dichtlippe 21 am Lagerabschnitt 16 und dem Stabiliserungswulst 18 ist am Innenmantel des Einführabschnittes 15 ein radial erweiterter Abschnitt 19 eingebracht. Der Abschnitt 19 stellt sicher, dass beim Einführen der Welle 13 in die Dichtbuchse 14 die Mantelfläche der Welle nur in begrenztem Kontakt mit dem Innenmantel der Dichtbuchse gelangt, um die Reibung zu reduzieren und das Einführen zu erleichtern. Im eingeschobenen Zustand liegen lediglich die beiden Dichtlippen 21 und 22 unmittelbar an der Mantelfläche der Welle 13 an. Der Stabilisierungswulst 18 ist dagegen in Radialrichtung gegenüber den Dichtlippen 21 und 22 zurückgesetzt und besitzt keinen unmittelbaren Kontakt zur Mantelfläche der Welle 13.

Der Einführabschnitt 15 ist insgesamt gegenüber dem Lagerabschnitt 16 geringfügig geneigt, derart, dass die Längsachsen der Ausnehmungen im Lagerabschnitt 16 und im Einführschnitt 15 zueinander einen kleinen Winkel einschließen, der im Ausführungsbeispiel kleiner als 10° ist, wobei gegebenenfalls auch größere Winkel in Betracht kommen, aber auch eine koaxiale Ausrichtung von Einführabschnitt und Lagerabschnitt. Über die winklige Anordnung des Einführabschnittes gegenüber dem Lagerabschnitt kann der konstruktiven Einbausituation der Dichtbuchse 14 Rechnung getragen werden.

## Patentansprüche

1. Scheibenwischvorrichtung für ein Fahrzeug mit einer Dichtbuchse (14) zur Aufnahme einer Welle (13) im Übertragungsweg zwischen einem Antriebsmotor (6) und einem Wischarm (4), wobei die Dichtbuchse (14) aus einem Einführabschnitt (15) zum Einführen der Welle und einem sich daran axial anschließenden Lagerabschnitt (16) besteht, wobei der Lagerabschnitt (16) auf der Innenseite radial nach innen ragende Dichtlippen (21, 22) zur axialen Begrenzung einer Lagerkammer (23) aufweist,
**dadurch gekennzeichnet, dass** die Wandung (24) des Lagerabschnitts (16) im Bereich zwischen den Dichtlippen (21, 22) balgförmig ausgebildet ist und dass auf der Innenseite des Einführabschnitts (15) ein radial nach innen ragender Stabilisierungswulst (18) angeordnet ist.

2. Scheibenwischvorrichtung nach Anspruch 1,
**dadurch gekennzeichnet, dass** der Stabilisierungswulst (18) axial in Höhe einer auf der Außenseite des Einführabschnitts (15) angeordneten Einkerbung (20) liegt, der zur Fixierung der Dichtbuchse (14) an einem Fahrzeugbauteil (2) dient.

3. Scheibenwischvorrichtung nach Anspruch 1 oder 2,
**dadurch gekennzeichnet, dass** auf der Innenseite des Einführabschnitts (15) zwischen dem Stabilisierungswulst (18) und der Dichtlippe (21) am Übergang zum Lagerabschnitt (16) ein radial erweiterter Abschnitt (19) angeordnet ist.

4. Scheibenwischvorrichtung nach einem der Ansprüche 1 bis 3,
**dadurch gekennzeichnet, dass** der lichte Durchmesser des Stabilisierungswulstes (18) größer ist als der lichte Durchmesser der Dichtlippen (21, 22).

5. Scheibenwischvorrichtung nach einem der Ansprüche 1 bis 4,
**dadurch gekennzeichnet, dass** auf der Innenseite des Einführabschnitts (15) benachbart zur Einführöffnung eine den Durchmesser verjüngende Einführschräge (17) angeordnet ist.

6. Scheibenwischvorrichtung nach Anspruch 5,
**dadurch gekennzeichnet, dass** die Einführschräge (17) sich bis zum Stabilisierungswulst (18) erstreckt.

## Claims

1. Windscreen wiper device for a vehicle, with a sealing bushing (14) for receiving a shaft (13) in the transmission path between a driving motor (6) and a wiper arm (4), wherein the sealing bushing (14) consists of an insertion section (15) for the insertion of the shaft and of a bearing section (16) axially adjoining said insertion section, wherein the bearing section (16) has sealing lips (21, 22) protruding radially inwards on the inside, for axially delimiting a bearing chamber (23), **characterized in that** the wall (24) of the bearing section (16) is designed in the form of a bellows in the region between the sealing lips (21, 22), and **in that** a stabilizing bead (18) which protrudes radially inwards is arranged on the inside of the insertion section (15).

2. Windscreen wiper device according to Claim 1,
**characterized in that** the stabilizing bead (18) lies axially level with a notch (20) which is arranged on the outside of the insertion section (15) and serves to fix the sealing bushing (14) on a vehicle component (2).

3. Windscreen wiper device according to Claim 1 or 2,
**characterized in that**, on the inside of the insertion section (15), a radially expanded section (19) is arranged on the transition to the bearing section (16) between the stabilizing bead (18) and the sealing lip (21).

4. Windscreen wiper device according to one of Claims 1 to 3, **characterized in that** the clear diameter of the stabilizing bead (18) is larger than the clear diameter of the sealing lips (21, 22).

5. Windscreen wiper device according to one of Claims 1 to 4, **characterized in that**, on the inside of the insertion section (15), a diameter-tapering insertion slope (17) is arranged adjacent to the insertion opening.

6. Windscreen wiper device according to Claim 5,
**characterized in that** the insertion slope (17) extends as far as the stabilizing bead (18).

## Revendications

1. Dispositif d'essuie-glace pour un véhicule, comprenant une douille d'étanchéité (14) pour recevoir un arbre (13) dans la voie de transfert entre un moteur d'entraînement (6) et un bras d'essuie-glace (4), la douille d'étanchéité (14) se composant d'une portion d'introduction (15) pour l'introduction de l'arbre et d'une portion de palier (16) s'y raccordant axialement, la portion de palier (16) présentant du côté intérieur des lèvres d'étanchéité (21, 22) saillant radialement vers l'intérieur pour limiter axialement une chambre de palier (23),
**caractérisé en ce que** la paroi (24) de la portion de palier (16) est réalisée en forme de soufflet dans la région entre les lèvres d'étanchéité (21, 22) et **en ce qu'**un bourrelet de stabilisation (18) saillant radialement vers l'intérieur est disposé sur le côté intérieur de la portion d'introduction (15).

2. Dispositif d'essuie-glace selon la revendication 1,
**caractérisé en ce que** le bourrelet de stabilisation (18) est situé axialement à la hauteur d'une encoche (20) disposée sur le côté extérieur de la portion d'introduction (15), et sert à la fixation de la douille d'étanchéité (14) contre un composant du véhicule (2).

3. Dispositif d'essuie-glace selon la revendication 1 ou 2, **caractérisé en ce**
**qu'**une portion (19) s'élargissant radialement est disposée sur le côté intérieur de la portion d'introduction (15) entre le bourrelet de stabilisation (18) et la lèvre d'étanchéité (21) au niveau de la transition à la portion de palier (16).

4. Dispositif d'essuie-glace selon l'une quelconque des revendications 1 à 3, **caractérisé en ce que** le diamètre intérieur du bourrelet de stabilisation (18) est supérieur au diamètre intérieur des lèvres d'étanchéité (21, 22).

5. Dispositif d'essuie-glace selon l'une quelconque des revendications 1 à 4,
**caractérisé en ce qu'**un biseau d'introduction (17) rétrécissant le diamètre est disposé sur le côté intérieur de la portion d'introduction (15) à côté de l'ouverture d'introduction.

6. Dispositif d'essuie-glace selon la revendication 5,
**caractérisé en ce que** le biseau d'introduction (17) s'étend jusqu'au bourrelet de stabilisation (18).
